(19) Europäisches Patentamt
European Patent Office
Office européen des brevets

(11) **EP 2 681 584 B1**

(12) **EUROPÄISCHE PATENTSCHRIFT**

(45) Veröffentlichungstag und Bekanntmachung des Hinweises auf die Patenterteilung:
**01.04.2015 Patentblatt 2015/14**

(51) Int Cl.:
***G01S 13/50*** *(2006.01)*   ***G01S 13/72*** *(2006.01)*
***G01S 13/44*** *(2006.01)*

(21) Anmeldenummer: **12715576.0**

(22) Anmeldetag: **29.02.2012**

(86) Internationale Anmeldenummer:
**PCT/DE2012/000209**

(87) Internationale Veröffentlichungsnummer:
**WO 2012/116689 (07.09.2012 Gazette 2012/36)**

(54) **VERFAHREN ZUR ERFASSUNG DER FLUGBAHN VON PROJEKTILEN**

METHODS FOR DETECTING THE FLIGHT PATH OF PROJECTILES

PROCÉDÉ DE DÉTECTION DE LA TRAJECTOIRE DE PROJECTILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2011 DE 102011012680**

(43) Veröffentlichungstag der Anmeldung:
**08.01.2014 Patentblatt 2014/02**

(73) Patentinhaber: **Airbus Defence and Space GmbH 85521 Ottobrunn (DE)**

(72) Erfinder:
• **SCHNEIDER, Robert 88483 Burgrieden (DE)**
• **WEISS, Georg 85110 Kipfenberg (DE)**

• **GRÜNER, Wilhelm 89075 Ulm (DE)**

(74) Vertreter: **Meel, Thomas Airbus Defence and Space GmbH Patentabteilung 88039 Friedrichshafen (DE)**

(56) Entgegenhaltungen:
**DE-A1- 2 942 355        DE-A1-102006 006 983 US-A1- 2008 169 967      US-A1- 2010 171 649**

• **ALLEN, M. R.; STOUGHTON, R. B.: "A Low Cost Radar Concept for Bullet Direction Finding", PROCEEDINGS OF THE 1996 IEEE NATIONAL RADAR CONFERENCE, 13. Mai 1996 (1996-05-13), Seiten 202-207, XP002678121,**

**Beschreibung**

Die Erfindung betrifft ein Verfahren zur Erfassung der Flugbahn von Projektilen.

Der Beschuss mit Handfeuerwaffen aus dem Hinterhalt (z.B. durch so genannte Sniper) stellt eine ständige Bedrohung von Soldaten beim Einsatz in Krisengebieten dar.

Es sind bereits Verfahren bekannt geworden, mit denen Informationen zu Ort und Richtung, aus dem der Beschuss erfolgt, gewonnen werden sollen. Sie beruhen auf akustischen Sensoren, die über den Mündungsknall die Position des Schützen ermitteln. Nachteilig an derartigen akustischen Sensoren ist, dass mehrere räumlich verteilte und vernetzte Stützstellen (Mikrofone) benötigt werden. Darüber hinaus können derartige akustische Systeme leicht durch Umgebungsgeräusche gestört werden. Auf fahrenden oder fliegenden Plattformen sind sie dadurch nicht oder nur eingeschränkt einsetzbar.

Des weiteren sind optische Verfahren bekannt, mit denen versucht wird, die Zieloptiken von Scharfschützen-Gewehren zu entdecken. Der Anwendungsbereich dieser Systeme ist stark eingeschränkt, da der Beschuss durch andere Handfeuerwaffen nicht detektiert werden kann. Auch diese Systeme werden in ihrer Effizienz durch Umgebungseinflüsse wie Lichtquellen oder Staub erheblich beeinträchtigt.

Aus DE 10 2006 006 983 A1 ist ein Verfahren zur Erfassung der Flugbahn und Bewegungsrichtung von Projektilen mittels eines kohärenten Pulsdopplerradars bekannt. Die Entfernungsmessung zu einem erfassten Objekt erfolgt hierbei über die Laufzeit der Echoimpulse, während die Ermittlung der Projektilgeschwindigkeit vorteilhaft mittels Doppler-Frequenzverschiebung im Echosignal festgestellt wird.

Ein weiteres Verfahren zur Erfassung der Flugbahn und Bewegungsrichtung von Projektilen ist aus Allen, M. R.; Stoughton, R. B.; A Low Cost Radar Concept for Bullet Direction Finding Proceedings of the 1996 IEEE National Radar Conference, 13-16 May 1996, pp 202-207 bekannt.

Die DE 40 12 247 A1 beschreibt ein Sensorsystem, mit dem Azimut-Winkel, Elevationswinkel, Radialentfernung und Radialgeschwindigkeit eines Ziels gemessen werden.

Die DE 40 08 395 A1 beschreibt ein Monopulsradar zur Bestimmung von Azimut, Elevation und Entfernung eines Geschosses.

Aufgabe der Erfindung ist es, ein Verfahren zu schaffen, mit dem die Erfassung der Flugbahn und Bewegungsrichtung von Projektilen zuverlässig und universell ermöglicht wird.

Diese Aufgabe wird mit dem Verfahren nach Patentanspruch 1 gelöst. Vorteilhafte Ausführungen sind Gegenstand von Unteransprüchen.

Für die Bestimmung der Flugbahn-Parameter von Projektilen (z. B. Gewehrgeschossen) sei angenommen, dass es sich dabei um Geraden handelt und die Geschwindigkeit im Erfassungsbereich konstant ist. Diese Annahmen sind in einer Vielzahl von Anwendungen zulässig, bei denen es darum geht, das Eindringen von Projektilen in eine Schutzzone zu detektieren und die Richtung zu bestimmen, aus der der Schuss abgegeben worden war. Dabei interessiert entweder nur die Richtung in der Ebene (Azimut) oder zusätzlich auch die Elevationsrichtung.

Als Sensor zur Lösung dieser Aufgabe kann zweckmäßig ein Dauerstrich-Dopplerradar mit der Fähigkeit zur Winkelpeilung eingesetzt werden. Die Winkelauflösung kann dabei entweder durch eine Mehrzahl von Empfangsantennen oder Sende-/Empfangsantennen mit Dichtwirkung erzielt werden oder durch Digitale Strahlformung (digital beam forming, DBF). Die Analyse des Dopplersignals ermöglicht eine Messung der radialen Geschwindigkeitskomponente der erfassten Objekte. Der Abdeckungsbereich des Radarsensors kann in einzelne Winkelsegmente aufgeteilt werden, die von räumlich verteilten Einzel- und/oder Mehrfachsensoren (Sende-/Empfangsmodu!e) erfasst werden.

Da Projektile typischerweise eine höhere Geschwindigkeit besitzen als alle anderen Reflexionsobjekte, kann die Extraktion relevanter Signale durch eine spektrale Diskriminierung in Form einer Hochpassfilterung bewerkstelligt werden. Dies gilt auch, wenn der Sensor auf einer sich bewegenden Plattform angeordnet ist (mit einer Geschwindigkeit über Grund bis zu etwa 300 km/h). Dadurch ergibt sich eine wirkungsvolle Clutterunterdrückung.

Die Erfindung wird im Weiteren anhand von Figuren näher erläutert. Es zeigen:

Fig. 1    einen beispielhaften Zeitverlauf der radialen Geschwindigkeitskomponente beim Vorbeiflug einen Projektils am Radar,

Fig. 2    einen beispielhaften Zeitverlauf der Peilungsrichtung in Azimut beim seitlichen Vorbeiflug eines Projektils am Sensor,

Fig. 3    eine beispielhafte Schaltungserweiterung eines Dopplerradarsensors für vertikale Winkelpeilung.

Der zeitliche Verlauf der Radialgeschwindigkeit $v_{rad}(t)$ beim Durchlaufen des Erfassungsbereichs des Sensors ist - unabhängig von der Richtung der Projektilflugbahn - durch den analytischen Zusammenhang (1) beschrieben [z. B. DE 29 42 355 A1]. Er ist gegebenenfalls aus den vom Sensor - im weiteren Verlauf wird unter einem Sensor ein Dauerstrich-Dopplerradar verstanden - gemessenen Daten innerhalb mehrerer Antennenkeulen zusammenzusetzen:

$$v_{rad}(t) = \frac{v_0^2 \cdot (t_d - t)}{\sqrt{v_0^2 (t_d - t)^2 + d^2}} . \qquad (1)$$

Dabei bezeichnet $v_0$ die absolute Projektilgeschwindigkeit, $d$ ist der minimale Abstand der Flugbahn vom Sensor (auch wenn dieser Punkt faktisch nie erreicht wird, weil das Projektil z. B. vorher im Boden einschlägt), und $t_d$ ist der Zeitpunkt,
zu dem das Projektil diesen Punkt der maximalen Annäherung (point of closest approach, POCA) passiert. An diesem Punkt verschwindet die Radialkomponente der Geschwindigkeit $v_{rad}(t)$, was anschaulich leicht klar wird.

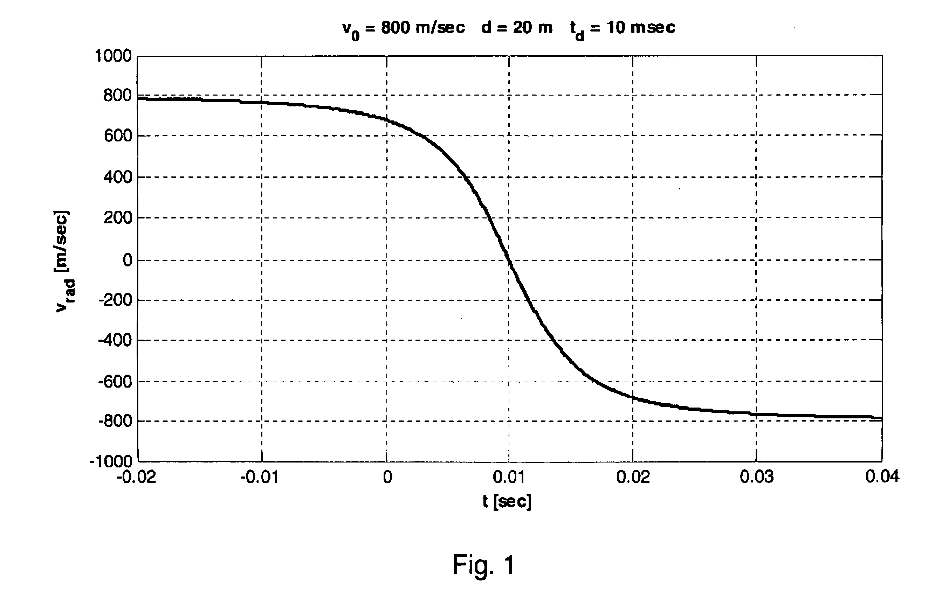

In Fig. 1 ist exemplarisch ein solcher Verlauf der Radialgeschwindigkeit für den Vorbeiflug eines Projektils mit der Eigengeschwindigkeit 800 m/sec im Abstand von 20 m vom Sensor dargestellt, wobei der POCA zum Zeitpunkt $t = t_d = 10$ msec erreicht wird.

Aus einer Folge von $N$ zu den Zeitpunkten $t_n$ mit n=1..N vom Doppler-Sensor gelieferten Zieldetektionen mit den gemessenen Radialgeschwindigkeiten $v_{rad}(t_n)$ wird ein nichtlineares Parameterfitting an die Beziehung (1) durchgeführt, um die Parameter $v_0$, $d$ und $t_d$ zu bestimmen bzw. im Sinne eines minimalen Fehlers (least mean square error, LMSE) zu schätzen. Da es sich um drei Unbekannte handelt, sind dazu mindestens $N = 3$ Messpunkte erforderlich. Geeignete Algorithmen hierfür werden beispielsweise in der Curve Fitting Toolbox von MATLAB® zur Verfügung gestellt.

Der Zusammenhang der Winkelpeilung des Radarsensors mit der Projektil-Flugbahn im Raum lässt sich über deren vektorielle Beschreibung ableiten. Die Flugbahn ist als Punkt-Richtungsgleichung einer Geraden mit dem Geschwindigkeitsvektor **v** und dem Ortsvektor zum POCA **d** gegeben durch die Zeitfunktion

$$\mathbf{r}(t) = \mathbf{d} + \mathbf{v} \cdot (t - t_d) \quad , \qquad (2)$$

welche mit dem Richtungsvektor zwischen Sensor und Projektil identisch ist, wenn der Radarsensor ortsfest im Ursprung des Koordinatensystem angenommen wird.

Die kartesischen Komponenten des Richtungsvektors **r** können durch die Richtungswinkel in Azimut $\alpha$ und Elevation $\varepsilon$ entsprechend der Kugelkoordinatendarstellung ausgedrückt werden als

$$\mathbf{r} = \begin{pmatrix} r_x \\ r_y \\ r_z \end{pmatrix} = |r| \begin{pmatrix} \sin\alpha \cdot \cos\varepsilon \\ \cos\alpha \cdot \cos\varepsilon \\ \sin\varepsilon \end{pmatrix} \quad , \qquad (3)$$

womit sich (2) schreibt als

$$|r(t)| \begin{pmatrix} \sin\alpha(t) \cdot \cos\varepsilon(t) \\ \cos\alpha(t) \cdot \cos\varepsilon(t) \\ \sin\varepsilon(t) \end{pmatrix} = d \begin{pmatrix} \sin\alpha_d \cdot \cos\varepsilon_d \\ \cos\alpha_d \cdot \cos\varepsilon_d \\ \sin\varepsilon_d \end{pmatrix} + v_0 \begin{pmatrix} \sin\alpha_0 \cdot \cos\varepsilon_0 \\ \cos\alpha_0 \cdot \cos\varepsilon_0 \\ \sin\varepsilon_0 \end{pmatrix} \cdot (t - t_d) \qquad (4)$$

Dabei bezeichnen $\alpha(t)$ bzw. $\varepsilon(t)$ die Peilungen des Radarsensors über der Zeit, $\alpha_d$ bzw. $\varepsilon_d$ die Winkelrichtungen zum POCA, und $\alpha_0$ bzw. $\varepsilon_0$ die Richtungen der Flugbahn in Azimut und Elevation, also die letztlich gesuchten Größen.

Durch Quotientenbildung aus den x- und y-Komponenten der Flugbahn (4) ergibt sich

$$\frac{r_x(t)}{r_y(t)} = \frac{\sin\alpha(t)}{\cos\alpha(t)} = \tan\alpha(t) = \frac{d \sin\alpha_d \cos\varepsilon_d + \sin\alpha_0 \cos\varepsilon_0 \cdot v_0(t - t_d)}{d \cos\alpha_d \cos\varepsilon_d + \cos\alpha_0 \cos\varepsilon_0 \cdot v_0(t - t_d)} \qquad (5)$$

nunmehr unabhängig vom Abstand $|r(t)|$ zum Projektil.

Zunächst sei der Fall betrachtet, dass der Radarsensor Peilwerte in Azimut $\alpha(t)$ liefert zur Bestimmung der Flugbahnrichtung in Azimut $\alpha_0$. Hierfür kann (5) in folgende Form gebracht werden:

$$\alpha(t) = \arctan \frac{d \sin \alpha_d k_\varepsilon + \sin \alpha_0 \cdot v_0 (t - t_d)}{d \cos \alpha_d k_\varepsilon + \cos \alpha_0 \cdot v_0 (t - t_d)} . \tag{6}$$

Dabei fallen die elevationsabhängigen Größen zu einem einzigen Term zusammen:

$$k_\varepsilon = \frac{\cos \varepsilon_d}{\cos \varepsilon_0} \tag{7}$$

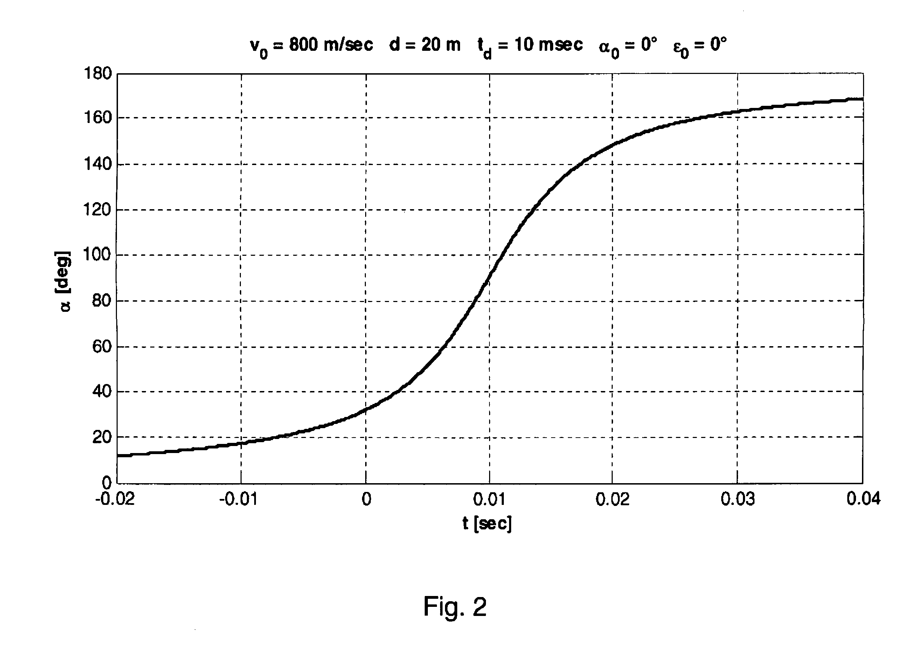

In Fig. 2 ist exemplarisch für den Fall eines Projektils mit $v_0$ =800 m/sec, $d$ = 20 m und $t_d$ = 10msec der zeitliche Verlauf der Azimutpeilung $\alpha(t)$ dargestellt. Der vereinfachten Interpretierbarkeit halber ist angenommen, dass das Projektil in Sensorhöhe aus der Richtung $\alpha_0$ = 0° und $\varepsilon_0$ = 0° kommend den Sensor rechts passiert, und somit leicht anschaulich gilt: $\alpha_d$ = 90°, $\varepsilon_d$ = 0° und damit $k_\varepsilon$ = 1.

Aus einer Folge von $N$ zu den bekannten Zeitpunkten $t_n$ mit $n$ = 1...$N$ vom Radarsensor gemessenen Azimut-Peilungen $\alpha(t_n)$ werden durch einen zweiten nichtlinearen Parameterfit an die Beziehung (5) die Parameter $\alpha_0$ und $k_\varepsilon$ bestimmt. Sofern keine Peilung in Elevation vorliegt, hat die Größe $k_\varepsilon$ keinen weiteren Nutzen für die Beschreibung der Flugbahn. Es kann dennoch festgestellt werden, dass in (5) der Einfluss der Elevationsrichtung der Flugspur $\varepsilon_0$ von der Bestimmung von $\alpha_0$ separiert ist und somit keine systematischen Fehler auftreten. Um eine eindeutige Parameter-Extraktion für $\alpha_0$ im gesamten 360°-Bereich zu ermöglichen, kann in (5) der Vier-Quadranten-Arkustangens mit Berücksichtigung der Vorzeichen von Zähler und Nenner angenommen werden.

Bei der Durchführung des zweiten Parameterfits der Azimutpeilwerte $\alpha(t_n)$ an (5) sind die Werte für $v_0$, $d$ und $t_d$ einzusetzen, die beim ersten Parameterfit an (1) anhand der Geschwindigkeitsmesswerte erhalten worden waren. Der Wert für $\alpha_d$, also die Azimut-Peilung in Richtung des POCA, ist aus den Peilwerten $a(t_n)$ abzuleiten. Da allerdings am POCA die Radialkomponente der Geschwindigkeit zu Null wird, liegen in direkter Umgebung des POCA wegen der Hochpass-Clutterfilterung keine Peilungen vor. Stattdessen kann eine Interpolation der Messwertefolge $\alpha(t_n)$ zum Zeitpunkt $t$ = $t_d$ durchgeführt werden: $\alpha_d = \alpha(t_d)$.

Für den Fall, dass der Radarsensor neben der Azimutpeilung auch eine Elevationspeilung durchführt, lässt sich das beschriebene Verfahren in einer vorteilhaften Ausführungsform um einen weiteren Schritt zur Flugspur-Richtungsbestimmung in Elevation erweitern.

Ein Ansatz hierfür ist die Verknüpfung der Vektorkomponenten von (4) in der Form

$$\left( \frac{r_x(t)}{r_y(t)} \right)^2 + \left( \frac{r_x(t)}{r_y(t)} \right)^2 = \frac{1}{\tan^2 \varepsilon(t)} , \tag{8}$$

was folgenden Ausdruck ergibt:

$$\tan \varepsilon(t) = \frac{d \sin \varepsilon_d + \sin \varepsilon_0 \cdot v_0 (t - t_d)}{\sqrt{(d \cos \alpha_d \cos \varepsilon_d + \cos \alpha_0 \cos \varepsilon_0 \cdot v_0 (t - t_d))^2 + (d \sin \alpha_d \cos \varepsilon_d + \sin \alpha_0 \cos \varepsilon_0 \cdot v_0 (t - t_d))^2}} \tag{9}$$

Auch in dieser Beziehung ist die Zielentfernung $|r(t)|$ nicht mehr enthalten und eine Auswertung rein auf Basis von Geschwindigkeits- und Peilungsinformation möglich.

Durch einen dritten nichtlinearen Parameterfit wird der funktionale Zusammenhang der rechten Seite von (9), in dem die Elevationsrichtung der Flugspur $\varepsilon_0$ die einzige verbleibende unbekannte Größe ist, an die aus den gemessenen Peilwerten gebildete Wertefolge $\tan \varepsilon(t_n)$ angepasst. Die bisher bestimmten Größen $d$ , $v_0$, $t_d$, $\alpha_d$ und $\alpha_0$ sind als bekannt einzusetzen, $\varepsilon_d$ ist wiederum durch Interpolation aus den Elevationspeilwerten $\varepsilon(t_n)$ zum Zeitpunkt $t$ = $t_d$ zu ermitteln: $\varepsilon_d = \varepsilon(t_d)$.

Gemäß der Erfindung liegen folgende Parameter zur Beschreibung der Projektil-Flugbahn vor:

- Geschwindigkeit $v_0$,
- minimaler Abstand vom Sensor d,
- Zeitpunkt des minimalen Abstands $t_d$,

4

- Azimutrichtung des Ortes mit minimalem Abstand (POCA) $\alpha_d$,
- Azimutrichtung der Flugbahn $\alpha_0$.

In einer besonderen Ausführungsform der Erfindung liegen nach einem dritten Parameterfit gemäß den Merkmalen des Anspruchs 2 weitere Parameter zur Beschreibung der Projektil-Flugbahn vor:

- optional: Elevationsrichtung des Ortes mit minimalem Abstand $\varepsilon_d$,
- optional: Elevationsrichtung der Flugbahn $\varepsilon_0$.

Wenn davon auszugehen ist, dass sich gleichzeitig mehrere Projektilen im Erfassungsbereich des Sensors befinden können, kann vor dem Anwenden der Parameter-Extraktion auf Basis von (1), (6) und gegebenenfalls (9) eine Segmentierung der Messwerte für Geschwindigkeit und Winkelpeilung ein zeitliches Tracking durchgeführt werden. Die Flugspur-Parameter können dann für jedes Segment (Projektil) separat bestimmt werden. Unter der Annahme, dass solche Szenarien nur bei der Abgabe von Geschoss-Salven auftreten, lässt sich der Parameterfit auf das Bestimmen einer einheitlichen Flugbahnrichtung optimieren.

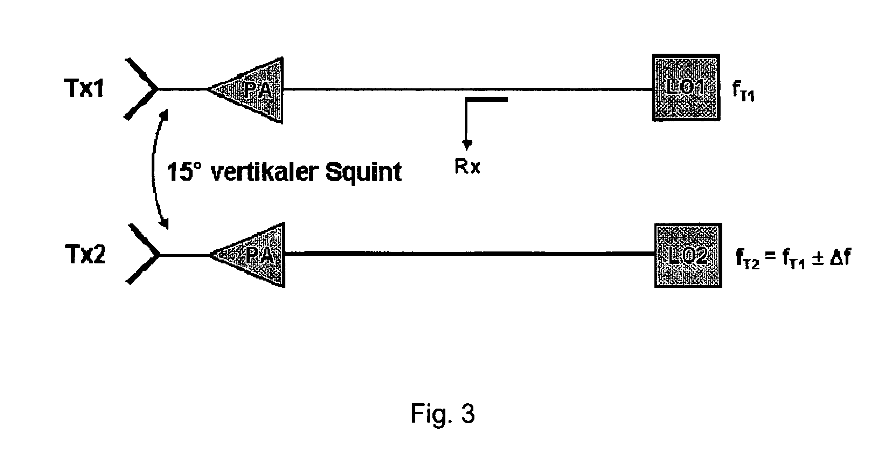

Die Winkelpeilung im Radarsensor kann durch Amplituden- oder Phasenmonopuls erfolgen. Für die Erweiterung des Verfahrens um Elevationspeilung findet sich erfindungsgemäß ein einfacher alternativer Ansatz: Die Beleuchterantenne wird doppelt ausgeführt mit vertikalem Winkelversatz. Beide Antennen senden gleichzeitig mit leicht unterschiedlichen Frequenzen $f_{Tx1}$ und $f_{Tx2} = f_{Tx1} + \Delta f$ (Differenz z. B. einige 100 Hz bis wenige kHz), die im gesamten Signalpfad des Empfängers einschließlich Digitalisierung parallel geführt werden. Erst in der Doppler-Analyse tauchen beide Spektrallinien separat auf, deren Amplitudenverhältnis im Sinne eines Amplitudenmonopuls für die beiden gegeneinander verkippten Beleuchterantennen die Elevationspeilung erlaubt. Empfangsseitig entsteht also kein zusätzlicher Hardware-Aufwand, der sendeseitige ist überschaubar. Ein Prinzipschaltbild für dieses Peilerkonzept ist in Fig. 3 dargestellt.

Bei der Durchführung der Doppleranalyse mit Hilfe einer numerisch effizienten FFT existiert folgende Problematik: Der zeitliche Verlauf der Dopplerfrequenz (proportional zur radialen Geschwindigkeitskomponente, siehe Fig.1) erlaubt nur kohärente Integrationszeiten von typischerweise wenigen Millisekunden. Darüber hinaus verschmiert sich der entstehende Peak im Dopplerspektrum (Doppler walk), so dass sich auf konventionelle Weise kein weiterer Integrationsgewinn ergibt. Verlängerte Integrationszeiten können aber erfindungsgemäß dadurch realisiert werden, dass das Dopplersignal als abschnittsweise linearer Chirp angenommen wird und vor der Doppler-FFT verschiedene hypothetische Korrekturen mit Chirps unterschiedlicher Länge und Steilheit mit steigender und fallender Frequenz durch Multiplikation im Zeitbereich durchgeführt werden. Alle diese korrigierten Signalblöcke werden dann der FFT unterworfen, und im Fall der richtigen Korrektur lassen sich um ca. 10 dB höhere Integrationsgewinne und somit Systemempfindlichkeiten erzielen. Alternativ ist auch eine modifizierte ISAR-Prozessierung denkbar, was hier aber nicht weiter ausgeführt werden soll.

Je nach Betriebsfrequenz des Radarsensors können die auftretenden relevanten Dopplerverschiebungen so niedrig sein, dass sie im Frequenzbereich niederfrequenten Rauschens (1/f-Rauschen) oder mechanischer Mikrofonieeffekte liegen. In diesem Fall kann eine sinusförmige Frequenzmodulation des Dauerstrich-Sendesignals und eine Analyse des Empfangssignals vorteilhaft bei der zweiten Harmonischen der Modulationsfrequenz angewendet werden [M. Skolnik: Introduction to Radar Systems, ed. 2].

Abschließend sei exemplarisch eine typische Systemauslegung für den Radarsensor genannt:

- Betriebsfrequenz im $K_u$-Band (z. B. 16 GHz)
- Vier Sensorsegmente (Quadranten) mit je einem breiten Beleuchter und 12 Empfangsantennenkeulen in Azimut durch DBF
- Sendeleistung 1 W
- Abtastfrequenz 300 kHz
- Clutter-Hochpassfilter mit 10 kHz Grenzfrequenz
- Integrationszeiten 1...10 msec.

## Patentansprüche

1. Verfahren zur Erfassung der Flugbahn von Projektilen, wobei mittels eines Dopplerradars entlang der Flugbahn des Projektils eine Folge von N Zieldetektionen zu den Zeitpunkten $t_n$ mit n=1...N, und N $\geq$3, mit den gemessenen Radialgeschwindigkeiten $v_{rad}(t_n)$ und azimutalen Winkelpeilungen $\alpha(t_n)$ des Projektils erfasst wird und aus diesen Messungen Flugbahn und Bewegungsrichtung des Projektils ermittelt werden,
**dadurch gekennzeichnet, dass**

- die Messungen $v_{rad}(t_n)$ in einem ersten nichtlinearen Parameterfit an einen analytischen Zusammenhang des zeitlichen Verlaufs der Radialgeschwindigkeit $v_{rad}(t)$ des Projektils beim Durchlaufen des Erfassungsbereichs des Radars angepasst werden und damit die Größen

$v_0$ : absolute Projektilgeschwindigkeit,
d : minimaler Abstand der Projektilflugbahn vom Radar,
$t_d$ : Zeitpunkt zu dem das Projektil den Punkt mit minimalem Abstand d passiert geschätzt werden und

- in einem zweiten nichtlinearen Parameterfit die Messungen $\alpha(t_n)$ an einen analytischen Zusammenhang des zeitlichen Verlaufs der Winkelrichtung in Azimut $\alpha(t)$ angepasst werden und damit die Flugbahnrichtung in Azimut $\alpha_0$ geschätzt wird und
- die Azimutrichtung des Punktes $\alpha_d$ mit minimalem Abstand der Projektilflugbahn vom Radar durch Interpolation der Messwertefolge $\alpha(t_n)$ zum Zeitpunkt $t=t_d$ bestimmt wird.

2. Verfahren nach Anspruch 1,
   **dadurch gekennzeichnet, dass**
   entlang der Flugbahn des Projektils zusätzlich eine Folge von N Winkelpeilungen des Projektils in Elevation $\varepsilon(t_n)$ erfasst werden und diese Messungen in einem dritten nichtlinearen Parameterfit an einen analytischen Zusammenhang des zeitlichen Verlaufs der Winkelrichtung in Elevation $\varepsilon(t)$ angepasst werden und damit die Flugbahnrichtung in Elevation $\varepsilon_0$ geschätzt wird und die Azimutrichtung des Punktes $\varepsilon_d$ mit minimalem Abstand der Projektilflugbahn vom Radar durch Interpolation der Messwertefolge $\varepsilon(t_n)$ zum Zeitpunkt $t=t_d$ bestimmt wird.

3. Verfahren nach einem der Ansprüche 1 oder 2,
   **dadurch gekennzeichnet, dass**
   die Winkelpeilung durch Amplituden- oder Phasenmonopuls erfolgt.

4. Verfahren nach einem der vorangehenden Ansprüche,
   **dadurch gekennzeichnet, dass**
   die Messung mittels eines Dauerstrich-Dopplerradars durchgeführt wird, welches mehrere Sende-/Empfangsmodule für unterschiedliche Raumwinkelsektoren aufweist.

5. Verfahren nach Anspruch 4,
   **dadurch gekennzeichnet, dass**
   im Sende-/Empfangsmodul richtungsselektive Antennendiagramme mittels digitaler Strahlformung erzeugt werden.

6. Verfahren nach Anspruch 4 oder 5,
   **dadurch gekennzeichnet, dass**
   das Sendesignal des Dauerstrich-Dopplerradars mit einer sinusförmigen Frequenzmodulation beaufschlagt ist, wobei im Radarempfänger der Frequenzbereich um die zweite Harmonische des Modulationssignals ausgewertet wird.

7. Verfahren nach einem der vorangehenden Ansprüche 4-6,
   **dadurch gekennzeichnet, dass**
   zur Digitalisierung eines empfangenen Signals eine Bandpassabtastung durchgeführt wird.

8. Verfahren nach einem der vorangehenden Anspruch 6,
   **dadurch gekennzeichnet, dass**
   zur Verlängerung der kohärenten Integrationszeit in der Doppler-Prozessierung eine Integration der Empfangssignale über FFT-Blöcke mit unterschiedlicher Länge durchgeführt wird.

9. Verfahren nach dem vorangehenden Anspruch 8,
   **dadurch gekennzeichnet, dass**
   vor einer Doppler-FFT-Verarbeitung des Empfangssignals eine hypothetische Korrektur des Verlaufs des Empfangssignals durch Multiplikation mit einem Satz linearer Frequenzchirps unterschiedlicher Rampensteilheit und Zeitdauer durchgeführt wird.

10. Verfahren nach einem der vorangehenden Ansprüche 4 bis 9,
    **dadurch gekennzeichnet, dass**
    als Betriebsfrequenz des Dopplerradars eine Frequenz aus dem Ku- oder K-Band eingesetzt wird.

**11.** Verfahren nach einem der vorangehenden Ansprüche 4 bis 9,
**dadurch gekennzeichnet, dass**
als Betriebsfrequenz des Dopplerradars eine Frequenz aus dem S- oder C-Band eingesetzt wird.

**12.** Verfahren nach einem der vorangehenden Ansprüche 4 bis 9,
**dadurch gekennzeichnet, dass**
die Sendeantenne eines Sende-/Empfangsmoduls doppelt ausgeführt wird, wobei beide Antennen einen vertikalen Winkelversatz aufweisen und gleichzeitig mit unterschiedlichen Frequenzen $f_{Tx1}$ und $f_{Tx2}=t_{Tx1}+\Delta f$ senden, wobei die Frequenzdifferenz $\Delta f$ 100 Hz bis 100 kHz beträgt.

**Claims**

**1.** Method for the detection of the trajectory of projectiles, wherein by means of a Doppler radar a series of N target detections at the points in time $t_n$ with n=1...N, and N $\geq$ 3, with the measured radial speeds $v_{rad}(t_n)$ and azimuthal angle bearings $\alpha(t_n)$ of the projectile are recorded along the trajectory of the projectile and the trajectory and direction of motion of the projectile are determined from said measurements,
**characterized in that**

- the measurements $v_{rad}(t_n)$ are adapted in a first non-linear parameter fit to an analytical relationship of the time profile of the radial speed $v_{rad}(t)$ of the projectile when passing through the detection region of the radar and hence the variables

$v_0$ : absolute projectile speed,
d : minimum distance of projectile trajectory from the radar,
$t_d$ : estimated point in time at which the projectile passes the point at the minimum distance d are estimated and

- in a second non-linear parameter fit the measurements $\alpha(t_n)$ are adapted to an analytical relationship of the time profile of the angular direction in azimuth $\alpha(t)$ and hence the trajectory direction in azimuth $\alpha_0$ is estimated and
- the azimuth direction of the point $\alpha_d$ at the minimum distance of the projectile trajectory from the radar is determined by interpolation of the series of measurement values $\alpha(t_n)$ at the point in time $t=t_d$.

**2.** Method according to Claim 1,
**characterized in that**
along the trajectory of the projectile, additionally a series of N angular bearings of the projectile in elevation $\varepsilon(t_n)$ is recorded and said measurements are adapted in a third non-linear parameter fit to an analytical relationship of the time profile of the angular direction in elevation $\varepsilon(t)$ and hence the trajectory direction in elevation $\varepsilon_0$ is estimated and the azimuth direction of the point $\varepsilon_d$ at the minimum distance of the projectile trajectory from the radar is determined by interpolation of the series of measurement values $\varepsilon(t_n)$ at the point in time $t=t_d$.

**3.** Method according to one of Claims 1 and 2,
**characterized in that**
the bearing indication takes place by amplitude or phase monopulse.

**4.** Method according to any one of the preceding claims,
**characterized in that**
the measurement is carried out by means of a continuous wave Doppler radar, which comprises a plurality of transmission/reception modules for different spatial angle sectors.

**5.** Method according to Claim 4,
**characterized in that**
in the transmission/reception module directionally selective antenna patterns are generated by means of digital beam forming.

**6.** Method according to Claim 4 or 5,
**characterized in that**
the transmission signal of the continuous wave Doppler radar is subjected to a sinusoidal frequency modulation, wherein the frequency range is analyzed for the second harmonic of the modulation signal in the radar receiver.

7. Method according to any one of the preceding Claims 4-6,
   **characterized in that**
   band pass sampling is carried out for digitization of a received signal.

8. Method according to one of the preceding Claim 6,
   **characterized in that**
   integration of the reception signal is carried out using FFT blocks with different lengths to extend the coherent integration time in the Doppler processing.

9. Method according to the preceding Claim 8,
   **characterized in that**
   prior to Doppler FFT processing of the reception signal, a hypothetical correction of the profile of the reception signal is carried out by multiplication with a set of linear frequency chirps of different ramp gradient and time duration.

10. Method according to any one of the preceding Claims 4 through 9,
    **characterized in that**
    a frequency from the $K_u$ band or K band is used as the working frequency of the Doppler radar.

11. Method according to any one of the preceding Claims 4 through 9,
    **characterized in that**
    a frequency from the S band or C band is used as the working frequency of the Doppler radar.

12. Method according to any one of the preceding Claims 4 through 9,
    **characterized in that**
    the transmission antenna of a transmission/ reception module is implemented in dual form, wherein both antennas have a vertical angular offset and transmit simultaneously with different frequencies $f_{Tx1}$ and $f_{Tx2}=f_{Tx1}+\Delta f$, wherein the frequency difference $\Delta f$ is from 100 Hz to 100 kHz.

**Revendications**

1. Procédé de détection de la trajectoire de vol de projectiles, une série de N détections de cible aux instants $t_n$, avec n = 1...N et N $\geq$ 3, étant détectée au moyen d'un radar à effet Doppler le long de la trajectoire de vol du projectile avec les vitesses radiales mesurées $v_{rad}(t_n)$ et les relèvements angulaires azimutaux $\alpha(t_n)$ du projectile et la trajectoire de vol ainsi que le sens de déplacement du projectile étant déterminés à partir de ces mesures,
   **caractérisé en ce que**

   - les mesures $v_{rad}(t_n)$ sont adaptées dans un premier ajustement non linéaire des paramètres à une relation analytique du tracé dans le temps de la vitesse radiale $v_{rad}(t)$ du projectile lors du passage à travers la zone de détection du radar et les grandeurs

      $v_0$ : vitesse absolue du projectile,
      d : écart minimal entre la trajectoire de vol du projectile et le radar,
      $t_d$ : instant auquel le projectile passe par le point d'écart minimal d sont ainsi estimées et

   - dans un deuxième ajustement non linéaire des paramètres, les mesures $\alpha(t_n)$ sont adaptées à une relation analytique du tracé dans le temps de la direction angulaire en azimut $\alpha(t)$ et la direction de la trajectoire de vol en azimut $\alpha_0$ est ainsi estimée et
   - la direction azimutale du point $\alpha_d$, qui présente l'écart minimal entre la trajectoire de vol du projectile et le radar, est déterminée par interpolation de la série de valeurs mesurées $\alpha(t_n)$ à l'instant t = $t_d$.

2. Procédé selon la revendication 1,
   **caractérisé en ce que**
   une série de N relèvements angulaires du projectile à l'élévation $\varepsilon(t_n)$ est en plus détectée le long de la trajectoire de vol du projectile et ces mesures sont adaptées dans un troisième ajustement non linéaire des paramètres à une relation analytique du tracé dans le temps de la direction angulaire en élévation $\varepsilon(t)$ et la direction de la trajectoire de vol en élévation $\varepsilon_0$ est ainsi estimée et la direction azimutale du point $\varepsilon_d$, qui présente l'écart minimal entre la trajectoire de vol du projectile et le radar, est déterminée par interpolation de la série de valeurs mesurées $\varepsilon(t_n)$ à l'instant t = $t_d$.

3. Procédé selon l'une des revendications 1 ou 2, **caractérisé en ce que** le relèvement angulaire s'effectue par impulsion simple en amplitude ou en phase.

4. Procédé selon l'une des revendications précédentes, **caractérisé en ce que** la mesure est réalisée au moyen d'un radar Doppler à ondes entretenues qui présente plusieurs modules d'émission/réception pour différents secteurs angulaires de l'espace.

5. Procédé selon la revendication 4, **caractérisé en ce que** dans le module d'émission/réception, des diagrammes d'antenne à sélectivité directionnelle sont générés par mise en forme numérique du faisceau.

6. Procédé selon la revendication 4 ou 5, **caractérisé en ce que** le signal émis du radar Doppler à ondes entretenues est soumis à une modulation de fréquence sinusoïdale, la plage de fréquences autour de la deuxième harmonique du signal de modulation étant analysée dans le récepteur radar.

7. Procédé selon l'une des revendications précédentes 4 à 6, **caractérisé en ce qu'**un échantillonnage passe-bande est effectué en vue de numériser un signal reçu.

8. Procédé selon la revendication précédente 6, **caractérisé en ce qu'**une intégration des signaux reçus est effectuée par le biais de blocs de FFT de longueurs différentes en vue de prolonger le temps d'intégration cohérent dans le traitement Doppler.

9. Procédé selon la revendication précédente 8, **caractérisé en ce qu'**avant un traitement Doppler-FFT du signal reçu est effectuée une correction hypothétique du tracé du signal reçu par multiplication avec un jeu de modulations de fréquence linéaires ayant des pentes de rampe et des durées différentes.

10. Procédé selon l'une des revendications précédentes 4 à 9, **caractérisé en ce que** la fréquence de service utilisée du radar Doppler est une fréquence de la bande Ku ou K.

11. Procédé selon l'une des revendications précédentes 4 à 9, **caractérisé en ce que** la fréquence de service utilisée du radar Doppler est une fréquence de la bande S ou C.

12. Procédé selon l'une des revendications précédentes 4 à 9, **caractérisé en ce que** l'antenne d'émission d'un module d'émission/réception est réalisée doublée, les deux antennes présentant un décalage angulaire vertical et émettant simultanément à des fréquences différentes $f_{Tx1}$ et $f_{Tx2} = f_{Tx1} + \Delta f$, la différence de fréquence $\Delta f$ étant comprise entre 100 Hz et 100 kHz.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006006983 A1
- DE 4012247 A1
- DE 4008395 A1
- DE 2942355 A1

**In der Beschreibung aufgeführte Nicht-Patentliteratur**

- **ALLEN, M. R. ; STOUGHTON, R. B.** *A Low Cost Radar Concept for Bullet Direction Finding Proceedings of the 1996 IEEE National Radar Conference,* 13. Mai 1996, 202-207
- **M. SKOLNIK.** Introduction to Radar Systems